Europäisches Patentamt

European Patent Office

Office européen des brevets

(19)

(11) Publication number: **0 134 712**
**B1**

(12) # EUROPEAN PATENT SPECIFICATION

(45) Date of publication of the patent specification:
17.12.86

(21) Application number: **84305580.7**

(22) Date of filling: **17.08.84**

(51) Int. Cl.⁴: **B 30 B 11/04,** F 16 J 15/06,
F 16 J 15/12, F 02 F 11/00,
B 28 B 3/06

(54) Method of making a gasket.

(30) Priority: **03.09.83 GB 8323669**

(43) Date of publication of application:
20.03.85 Bulletin 85/12

(45) Publication of the grant of the patent:
17.12.86 Bulletin 86/51

(84) Designated Contracting States:
AT CH DE FR IT LI SE

(56) References cited:
US-A-3 082 503

(73) Proprietor: **PAYEN INTERNATIONAL LIMITED, 14
Liverpool Road, Slough, SL1 4QP (GB)**

(72) Inventor: **Bate, Cecil Albert, 18 Greenacres
Avenue, Ickenham Middlesex UB10 8HG (GB)**
Inventor: **Robinson, Kay, 14 Wimpole Street, West
Drayton Middlesex UB7 7RJ (GB)**

(74) Representative: **Newman, Dennis Daniel Ernest,
Trafford Park P.O. Box 20 Ashburton Road
West, Manchester, M17 1RA (GB)**

LIBER, STOCKHOLM 1986

## Description

Invention relates to a method of making a gasket, particularly a gasket of the kind comprising graphite foils with a reinforcement plate between them.

In GB-A- 2 088 491 there is described a method of making such a gasket for automotive and petrochemical applications which entails (among other things) pressing particles of expanded graphite in a mould onto the opposed faces of an apertured reinforcement plate to compact the particles and unite them into foils which adhere to the plate. The method as described in the citation avoids the excessive waste of graphite that results when cutting foils from sheets of compressed expanded graphite, but does not give good results when applied to the manufacture of gaskets which have a relatively narrow area (or 'land') bridging adjacent apertures, as in a gasket for the cylinder head of an internal combustion engine. What happens is that the land becomes formed with too low a density to have adequate strength or sealing capacity. The method of the invention makes use of a mould assembly comprising a base plate, first and second moulding rings, and a moulding punch which is apertured to conform with the apertures of the gasket reinforcement plate, the assembly being used as follows:

(I) the first ring is positioned to surround the base plate and form with it a lower mould recess

(II) expanded graphite particles are charged to the recess to present a level surface to the reinforcement plate

(III) the apertured reinforcement plate is laid on the level surface of the charge

(IV) the second ring is positioned above the first to form an upper mould recess

(V) expanded graphite particles are charged to the upper recess to cover the reinforcement plate and present a level surface to the moulding punch

(VI) the moulding punch is operated to compact the graphite particles and unite them to the plate

The expanded graphite particles employed suitably have a density in the range 4 - 40 kg/m$^3$. The graphite foils forming part of the finished gasket will usually have a density which is in the range 800-1600 kg/m$^3$. The 'finished' density need not be achieved in step (VI), whose purpose is primarily to produce a composite whose graphite layers are firm enough to withstand handling during and after removal from the mould assembly.

Ordinarily this is achieved by compaction in the mould assembly to a density of 400 kg/m$^3$ or more.

Compaction of the graphite to the finished density is preferably carried out outside the mould assembly, for example by passing the composite between compressor rollers.

With a reinforcement plate that is smooth-faced, it will usually be necessary to pre-coat the plate with adhesive before laying it on the charge of expanded graphite.

The uncompacted graphite, such as that which remains in the apertures of the moulding punch, can of course be employed in subsequent moulding operations.

If it is desired to form a gasket whose graphite faces, although flat, have regions of different density, sections of the base plate and punch of the mould can have cavities formed by springloaded inserts in appropriate regions to produce that result.

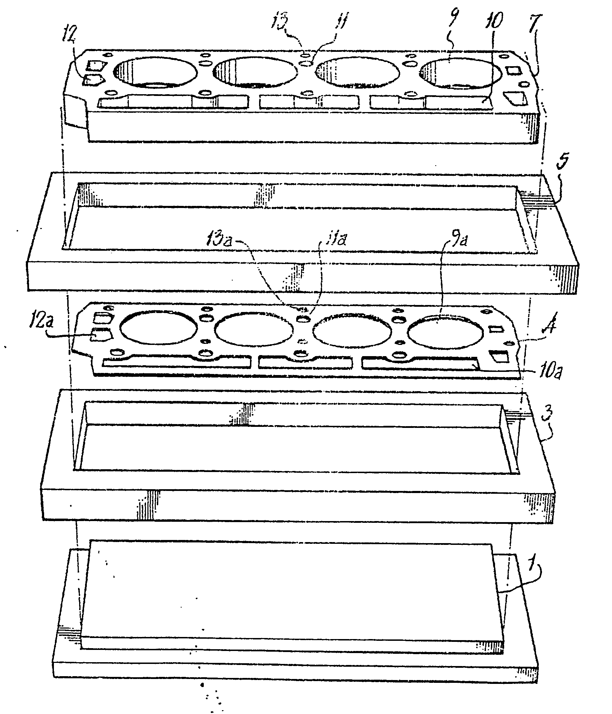

The invention will now be further described with reference to the accompanying drawing, which is a view in perspective of a mould assembly suitable for the production of a gasket for the cylinder head of a 4-cylinder internal combustion engine.

The mould assembly comprises a base plate 1, first and second moulding rings 3 and 5, and a moulding punch 7 apertured as at 9, 10, 11, 12 and 13 to conform with apertures 9a etc. in the smooth-surfaced metal plate A which is to be the reinforcement of the finished gasket, these apertures 9a - 13a being respectively for cylinder bores, push rods, oil, water and bolts. In a typical procedure, the first ring 3 is lowered to surround the base plate 1 and form with it a lower mould recess, into which expanded graphite of density 25 kg/m$^3$ is poured. The surface of the graphite charge is then made level, by use of a rake, brushes or doctor blade, to give a uniform depth of say 15mm from the upper surface of ring 3 to the upper surface of base plate 1. The reinforcement plate A, coated on each side with adhesive, is then laid on the level surface of the graphite charge, and the second moulding ring 5 is lowered to rest on the first ring 3 and form an upper mould recess. Expanded graphite is then poured into the upper recess to cover the plate A to a depth of about 15mm, and this second charge of graphite is made level with the upper face of ring 5. Rings 3 and 5 are selected to have a thickness corresponding to the desired depths of graphite charge below and above the reinforcement plate. The internal surfaces of rings 3 and 5 constitute the side walls of a mould whose base is formed by base plate 1 and whose roof is formed by moulding punch 7, which is operated to compact the expanded graphite particles in the mould to a density of 700 - 800 kg/m$^3$ and unite them to the plate, forming a composite of plate and adherent layers of compacted graphite. After withdrawal of punch 7 and removal of rings 3 and 5, the composite is removed, graphite is trimmed from its cut edges (such as those corresponding to the cylinder bores), and the composite is then passed between polished steel-faced rollers to compress the graphite layers into foils of density of 1500 kg/m$^3$ and thus form the desired gasket.

This can then be subjected to such conventional operations as the insertion of eyelets and treatment of the gasket surface to promote easy release (as during engine servicing) from a cylinder head and block.

## Claims

1. A method of making a gasket by pressing particles of expanded graphite in a mould onto the opposed surfaces of an apertured reinforcement plate to compact the particles and unite them with the plate, in which method there is used a mould assembly comprising a base plate, first and second moulding rings, and a moulding punch which is apertured to conform with the apertures of the reinforcement plate, the assembly being used as follows:

(i) the first ring is positioned to surround the base plate and form with it a lower mould recess

(ii) expanded graphite particles are charged to the recess to present a level surface to the reinforcement plate

(iii) the apertured reinforcement plate is laid on the level surface of the graphite charge

(iv) the second ring is positioned above the first to form an upper mould recess

(v) expanded graphite particles are charged to the upper recess to cover the reinforcement plate and present a level surface to the moulding punch

(vi) the moulding punch is operated to compact the graphite particles and unite them with the plate.

2. A method according to claim 1, in which the composite resulting from step (VI) is subjected to further compaction outside the mould assembly.

3. A method according to claim 2, in which the further compaction is carried out by passing the composite between compressor rollers.

4. A method according to claim 1, 2, or 3, in which the reinforcement plate submitted to stage (iii) is coated with adhesive.

5. A method according to any one of claims 1 - 4, applied to the manufacture of a cylinder head gasket.

## Patentansprüche

1. Verfahren zur Herstellung einer Dichtung durch Verpressen von Teilchen von geblähtem Graphit in einer Form auf die entgegengesetzten Oberflächen einer mit Öffnungen versehenen Verstärkungsplatte zum Verdichten der Teilchen und zu ihrer Verbindung mit der Platte, dadurch gekennzeichnet, daß dabei eine Formanordnung benutzt wird, welche eine Grundplatte, einen ersten und zweiten Formring und einen Lochstempel umfaßt, dessen Löcher mit den Löchern der Verstärkungsplatte übereinstimmen, wobei die Anordnung wie folgt eingesetzt wird.

(i) der erste Ring ist so angeordnet, daß er die Grundplatte umgibt und mit ihr eine untere Formvertiefung bildet,

(ii) geblähte Graphitteilchen werden in die Vertiefung eingebracht, um eine ebene Oberfläche für die Verstärkungsplatte zu bilden,

(iii) die gelochte Verstärkungsplatte wird auf die ebene Oberfläche der Graphitbeladung aufgelet,

(iv) der zweite Ring wird über den ersten angeordnet, um eine obere Formvertiefung zu bilden,

(v) geblähte Graphitteilchen werden in die obere Vertiefung eingebracht, um die Verstärkungsplatte zu bedecken und eine ebene Oberfläche für die Lochstanze zu liefern,

(vi) die Formstanze wird betätigt, um die Graphitteilchen zu verdichten und sie mit der Platte zu verbinden.

2. Verfahren nach Anspruch 1, dadurch gekennzeichnet, daß der aus der Stufe (vi) stammende Verbund einer weite auderhalb der Formanordnung unterzogen wird.

3. Verfahren nach Anspruch 2, dadurch gekennzeichnet, daß die weitere Verdichtung durchgeführt wird, indem man den Verbund zwischen Druckrollen führt.

4. Verfahren nach den Ansprüchen 1, 2 oder 3, dadurch gekennzeichnet, daß die Verstärkungsplatte, die der Stufe (iii) unterwofen wird, mit Klebstoff beschichtet ist.

5. Verfahren nach einem der Ansprüche 1 bis 4, dadurch gekennzeichnet, daß es auf die Herstellung einer Zylinderkopfdichtung angewandt wird.

## Revendications

1. Procédé de fabrication de joint d'étanchéité par pressage dans un moule de particules de graphite expansé opéré sur les surfaces opposées d'une plaque de renfort percées d'ouvertures pour compacter les particules et les unir avec la plaque, procédé daus lequel on utilise un assemblage de moule comprenant une embase, un premier et un second anneaux de moulage et un poinçon de moulage percé d'ouvertures épousant la forme des ouvertures de la plaque de renfort, l'assemblage étant utilisé comme suit :

(i) on place le premier anuneau de façon qu'il entoure l'embase et forme avec elle un logement de moule inférieur

(ii) on charge des particules de graphite expansé dans le logement de façon à présenter une surface de niveau à la plaque de renfort

(iii) on pose la plaque de renfort percée d'ouvertures sur la surface de niveau de la charge de graphite

(iv) on place le second anneau au-dessus du premier pour former un logement de moule supérieur

(v) on charge des particules de graphite expansé dans le logement supérieur de façon qu'elles recouvrent la plaque de renfort et présentent une surface de niveau au poinçon de moulage

(vi) on fait agir le poinçon de moulage pour compacter les particules de graphite et les unir à la plaque.

2. Procédé selon la revendication 1, dans lequel on soumet le produit composite résultant de l'opération (VI) à un compactage plus poussé à l'extérieur de l'assemblage de moule.

3. Procédé selon la revendication 2, dans lequel on effectue le compactage plus poussé en faisant passer le produit composite entre des rouleaux compresseurs.

4. Procédé selon la revendication 1, 2 ou 3, dans lequel la plaque de renfort soumise à l'étape (iii) est revêtue d'adhésif.

5. Procédé selon l'une quelconque des revendications 1 à 4, appliqué à la fabrication d'un joint d'étanchéité de culasse.